(19) Europäisches Patentamt / European Patent Office / Office européen des brevets

(11) **EP 3 198 555 B1**

(12) **EUROPEAN PATENT SPECIFICATION**

(45) Date of publication and mention
of the grant of the patent:
**01.01.2020 Bulletin 2020/01**

(21) Application number: **15750528.0**

(22) Date of filing: **29.07.2015**

(51) Int Cl.:
*G06T 5/00* (2006.01)          *G06T 5/10* (2006.01)
*H04N 19/00* (2014.01)

(86) International application number:
**PCT/US2015/042599**

(87) International publication number:
**WO 2016/048448 (31.03.2016 Gazette 2016/13)**

(54) **FREQUENCY-DOMAIN DENOISING**

RAUSCHUNTERDRÜCKUNG IM FREQUENZBEREICH

SUPPRESSION DE BRUIT DANS LA GAMME DE FRÉQUENCES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2014 US 201414496563**

(43) Date of publication of application:
**02.08.2017 Bulletin 2017/31**

(73) Proprietor: **Google LLC
Mountain View, CA 94043 (US)**

(72) Inventors:
• **KOPP, Timothy**
  **Mountain View, California 94043 (US)**
• **HAN, Jingning**
  **Mountain View, California 94043 (US)**

(74) Representative: **Openshaw & Co.
8 Castle Street
Farnham, Surrey GU9 7HR (GB)**

(56) References cited:
**EP-A2- 1 499 114**

• **DMYTRO RUSANOVSKYY ET AL: "Video
Denoising Algorithm in Sliding 3D DCT Domain",
1 January 2005 (2005-01-01), ADVANCED
CONCEPTS FOR INTELLIGENT VISION
SYSTEMS LECTURE NOTES IN COMPUTER
SCIENCE;;LNCS, SPRINGER, BERLIN, DE,
PAGE(S) 618 - 625, XP019019728, ISBN:
978-3-540-29032-2 abstract section "3 Video
Denoising Based on a 3D DCT"**
• **QUIJAS JONATHAN ET AL: "Removing JPEG
blocking artifacts using machine learning", 2014
SOUTHWEST SYMPOSIUM ON IMAGE
ANALYSIS AND INTERPRETATION, IEEE, 6 April
2014 (2014-04-06), pages 77-80, XP032592194,
DOI: 10.1109/SSIAI.2014.6806033 [retrieved on
2014-04-27]**

**Description**

BACKGROUND

Digital video can be used, for example, for remote business meetings via video conferencing, high definition video entertainment, video advertisements, or sharing of user-generated videos. Due to the large amount of data involved in video data, high performance compression is needed for transmission and storage. Accordingly, it would be advantageous to provide high resolution video transmitted over communications channels having limited bandwidth.

EP-A2-1,499,114 relates to a noise reduction method performed by a pre-processor and includes classifying a received original signal into predetermined size blocks; decomposing a received signal into a pre-determined number of equal sized blocks; generating at least one rebuilt signal by removing first predetermined numbers of pixels from the beginning of the decomposed signal and second predetermined numbers of pixels from the end of the decomposed signal; and removing noise in the frequency domain by converting the original signal and the rebuilt signals into signals in the frequency domain.

SUMMARY

This application relates to encoding and decoding of video stream data for transmission or storage, using frequency-domain denoising.

In one aspect, there is provided a method as set out in claim 1.

In another aspect, there is provided a system as set out in claim 9.

In a further aspect, there is provided a non-transitory computer-readable medium as set out in claim 10.

Variations in these and other aspects will be described in additional detail hereafter.

BRIEF DESCRIPTION OF THE DRAWINGS

The description herein makes reference to the accompanying drawings wherein like reference numerals refer to like parts throughout the several views, and wherein:

FIG. 1 is a diagram of a computing device in accordance with implementations of this disclosure;
FIG. 2 is a diagram of a computing and communications system in accordance with implementations of this disclosure;
FIG. 3 is a diagram of a video stream for use in encoding and decoding in accordance with implementations of this disclosure;
FIG. 4 is a block diagram of an encoder in accordance with implementations of this disclosure;
FIG. 5 is a block diagram of a decoder in accordance with implementations of this disclosure;
FIG. 6 is a block diagram of a representation of a portion of a frame in accordance with implementations of this disclosure;
FIG. 7 is a diagram of an example of coding a video stream using temporal-domain denoising in accordance with implementations of this disclosure; and
FIG. 8 is a diagram of an example of coding a video stream using frequency-domain denoising in accordance with implementations of this disclosure.

DETAILED DESCRIPTION

Digital video streams may represent video using a sequence of frames or images. Each frame can include a number of blocks, which include information indicating pixel attributes, such as color values or brightness. Transmission and storage of video can use significant computing or communications resources. Compression and other coding techniques may be used to reduce the amount of data in video streams.

The utility of a video coder may depend on compression speed, compression performance, compression fidelity, and decoded visual quality. Compression speed indicates the time utilized to compress a video. Compression performance represents the difference in bandwidth required for storing or transmitting the encoded video compared to the source video. Compression fidelity indicates how well a decoded video matches the source video. Decoded visual quality represents the visual quality of a decoded video, which may be subjective. In some implementations, noise or other undesired artifacts captured in the input video signal may reduce the utility of a video coder. For example, input noise, which may be random, unpredictable noise, can be propagated to the decoded video and thus reduce decoded visual quality. In some implementations, input noise may reduce compression speed, compression performance and/or compression fidelity.

In some implementations, frequency-domain denoising may improve compression speed, compression performance, compression fidelity and/or decoded visual quality by removing noise from an input video stream before, or during, video coding. In some implementations, frequency-domain denoising includes identifying variable size source blocks from a current frame of a source video stream and generating a denoised block for each source block using a frequency-domain denoising function. In some implementations, denoising a block includes generating a prediction block for the source block, transforming the source block and the prediction block into the frequency domain, denoising the source transformed block using the frequency-domain denoising function based on the predicted transformed block, and inverse transforming the denoised block.

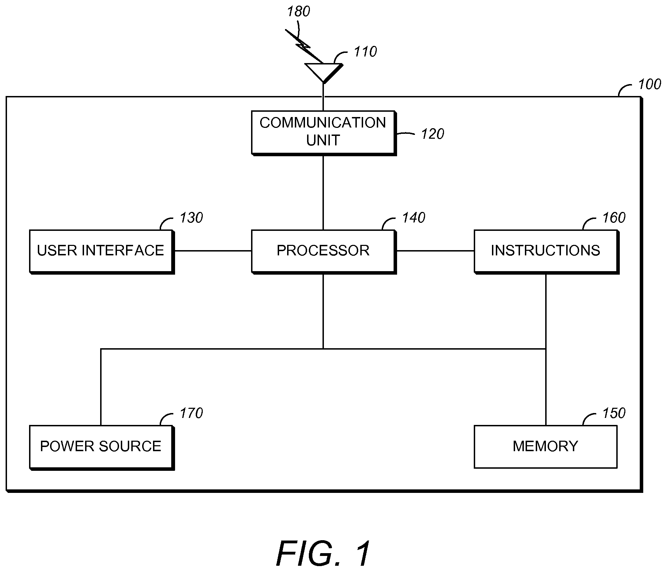

FIG. 1 is a diagram of a computing device 100 in accordance with implementations of this disclosure. Computing device 100 can include a communication interface 110, a communication unit 120, a user interface (UI) 130, a processor 140, a memory 150, instructions 160, a power source 170, or any combination thereof. As used herein, the term "computing device" includes any unit, or combination of units, capable of performing any method, or any portion or portions thereof, disclosed herein.

Computing device 100 may be a stationary computing device, such as a personal computer (PC), a server, a workstation, a minicomputer, or a mainframe computer; or a mobile computing device, such as a mobile telephone, a personal digital assistant (PDA), a laptop, or a tablet PC. Although shown as a single unit, any one or more elements of communication device 100 can be integrated into any number of separate physical units. For example, UI 130 processor 140 can be integrated in a first physical unit and memory 150 can be integrated in a second physical unit.

Communication interface 110 can be a wireless antenna, as shown, a wired communication port, such as an Ethernet port, an infrared port, a serial port, or any other wired or wireless unit capable of interfacing with a wired or wireless electronic communication medium 180.

Communication unit 120 can be configured to transmit or receive signals via wired or wireless medium 180. For example, as shown, communication unit 120 is operatively connected to an antenna configured to communicate via wireless signals. Although not explicitly shown in FIG. 1, communication unit 120 can be configured to transmit, receive or both via any wired or wireless communication medium, such as radio frequency (RF), ultra violet (UV), visible light, fiber optic, wire line, or a combination thereof. Although FIG. 1 shows a single communication unit 120 and a single communication interface 110, any number of communication units and any number of communication interfaces can be used.

UI 130 can include any unit capable of interfacing with a user, such as a virtual or physical keypad, a touchpad, a display, a touch display, a speaker, a microphone, a video camera, a sensor, or any combination thereof. UI 130 can be operatively coupled with processor 140, as shown, or with any other element of communication device 100, such as power source 170. Although shown as a single unit, UI 130 may include one or more physical units. For example, UI 130 may include an audio interface for performing audio communication with a user, and a touch display for performing visual and touch based communication with the user. Although shown as separate units, communication interface 110, communication unit 120, and UI 130, or portions thereof, may be configured as a combined unit. For example, communication interface 110, communication unit 120, and UI 130 may be implemented as a communications port capable of interfacing with an external touchscreen device.

Processor 140 can include any device or system capable of manipulating or processing a signal or other information now-existing or hereafter developed, including optical processors, quantum processors, molecular processors, or a combination thereof. For example, processor 140 can include a general purpose processor, a special purpose processor, a conventional processor, a digital signal processor (DSP), a plurality of microprocessors, one or more microprocessor in association with a DSP core, a controller, a microcontroller, an Application Specific Integrated Circuit (ASIC), a Field Programmable Gate Array (FPGA), a programmable logic array, programmable logic controller, microcode, firmware, any type of integrated circuit (IC), a state machine, or any combination thereof. As used herein, the term "processor" includes a single processor or multiple processors. Processor 140 can be operatively coupled with communication interface 110, communication unit 120, UI 130, memory 150, instructions 160, power source 170, or any combination thereof.

Memory 150 can include any non-transitory computer-usable or computer-readable medium, such as any tangible device that can, for example, contain, store, communicate, or transport instructions 160, or any information associated therewith, for use by or in connection with processor 140. The non-transitory computer-usable or computer-readable medium can be, for example, a solid state drive, a memory card, removable media, a read only memory (ROM), a random access memory (RAM), any type of disk including a hard disk, a floppy disk, an optical disk, a magnetic or optical card, an application specific integrated circuits (ASICs), or any type of non-transitory media suitable for storing electronic information, or any combination thereof. Memory 150 can be connected to, for example, processor 140 through a memory bus in an example.

Instructions 160 can include directions for performing any method, or any portion or portions thereof, disclosed herein. Instructions 160 can be realized in hardware, software, or any combination thereof. For example, instructions 160 may be implemented as information stored in memory 150, such as a computer program, that may be executed by processor 140 to perform any of the respective methods, algorithms, aspects, or combinations thereof, as described herein. Instructions 160, or a portion thereof, may be implemented as a special purpose processor, or circuitry, that can include specialized hardware for carrying out any of the methods, algorithms, aspects, or combinations thereof, as described herein. Portions of instructions 160 can be distributed across multiple processors on the same machine or different machines or across a network such as a local area network, a wide area network, the Internet, or a combination thereof.

Power source 170 can be any suitable device for powering communication interface 110. For example, power source 170 can include a wired power source; one or more dry cell batteries, such as nickel-cadmium (NiCd), nickel-zinc (NiZn), nickel metal hydride (NiMH), lithium-ion (Li-ion); solar cells; fuel cells; or any other device capable of powering communication interface 110. Communication interface 110, communication unit 120, UI 130, processor 140, instructions 160, memory 150, or any combination thereof, can be operatively coupled with power source 170.

Although shown as separate elements, communication interface 110, communication unit 120, UI 130, processor 140, instructions 160, power source 170, memory 150, or any combination thereof can be integrated in one or more electronic units, circuits, or chips.

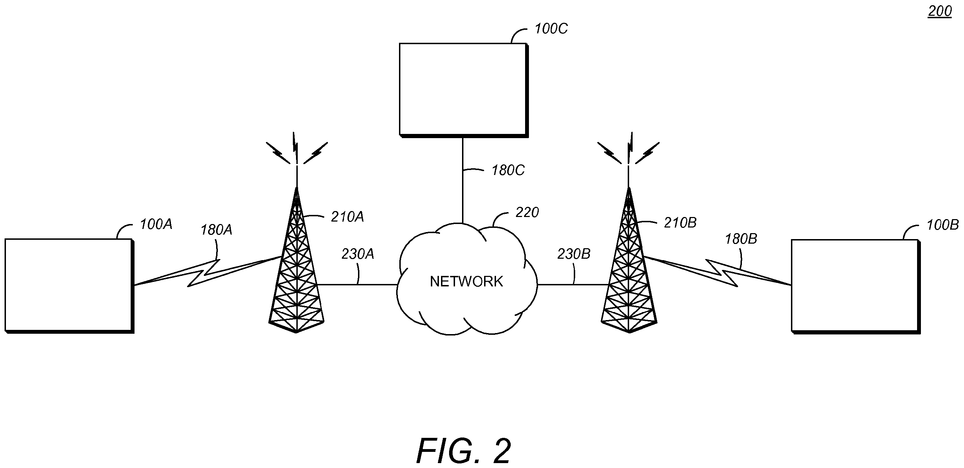

FIG. 2 is a diagram of a computing and communications system 200 in accordance with implementations of this disclosure. Computing and communications system 200 may include one or more computing and communication devices 100A/100B/100C, one or more access points 210A/210B, one or more networks 220, or a combination thereof. For example, computing and communication system 200 can be a multiple access system that provides communication, such as voice, data, video, messaging, broadcast, or a combination thereof, to one or more wired or wireless communicating devices, such as computing and communication devices 100A/100B/100C. Although FIG. 2 shows three computing and communication devices 100A/100B/100C, two access points 210A/210B, and one network 220 for simplicity, any number of computing and communication devices, access points, and networks can be used.

Computing and communication device 100A/100B/100C can be, for example, a computing device, such as computing device 100 shown in FIG. 1. As shown, computing and communication devices 100A/100B may be user devices, such as a mobile computing device, a laptop, a thin client, or a smartphone, and computing and communication device 100C may be a server, such as a mainframe or a cluster. Although computing and communication devices 100A/100B are described as user devices, and computing and communication device 100C is described as a server, any computing and communication device may perform some or all of the functions of a server, some or all of the functions of a user device, or some or all of the functions of a server and a user device.

Each computing and communication device 100A/100B/100C can be configured to perform wired or wireless communication. For example, computing and communication device 100A/100B/100C can be configured to transmit or receive wired or wireless communication signals and can include a user equipment (UE), a mobile station, a fixed or mobile subscriber unit, a cellular telephone, a personal computer, a tablet computer, a server, consumer electronics, or any similar device. Although each computing and communication device 100A/100B/100C is shown as a single unit, a computing and communication device can include any number of interconnected elements.

Each access point 210A/210B can be any type of device configured to communicate with computing and communication device 100A/100B/100C, a network 220, or both via wired or wireless communication links 180A/180B/180C. For example, access point 210A/210B can include a base station, a base transceiver station (BTS), a Node-B, an enhanced Node-B (eNode-B), a Home Node-B (HNode-B), a wireless router, a wired router, a hub, a relay, a switch, or any similar wired or wireless device. Although each access point 210A/210B is shown as a single unit, an access point can include any number of interconnected elements.

Network 220 can be any type of network configured to provide services, such as voice, data, applications, voice over internet protocol (VoIP), or any other communications protocol or combination of communications protocols, over a wired or wireless communication link. For example, network 220 can be a local area network (LAN), wide area network (WAN), virtual private network (VPN), a mobile or cellular telephone network, the Internet, or any other means of electronic communication. Network 220 can use a communication protocol, such as the transmission control protocol (TCP), the user datagram protocol (UDP), the internet protocol (IP), the real-time transport protocol (RTP) the Hyper Text Transport Protocol (HTTP), or a combination thereof.

Computing and communication devices 100A/100B/100C can communicate with each other via network 220 using one or more a wired or wireless communication links, or via a combination of wired and wireless communication links. For example, as shown computing and communication devices 100A/100B can communicate via wireless communication links 180A/180B, and computing and communication device 100C can communicate via wired communication link 180C. Any of computing and communication devices 100A/100B/100C may communicate using any wired or wireless communication link, or links. For example, first computing and communication device 100A can communicate via first access point 210A using a first type of communication link, second computing and communication device 100B can communicate via second access point 210B using a second type of communication link, and third computing and communication device 100C can communicate via a third access point (not shown) using a third type of communication link. Similarly, access points 210A/210B can communicate with network 220 via one or more types of wired or wireless communication links 230A/230B. Although FIG. 2 shows computing and communication devices 100A/100B/100C in communication via network 220, computing and communication devices 100A/100B/100C can communicate with each other via any number of communication links, such as a direct wired or wireless communication link.

Other implementations of computing and communications system 200 are possible. For example, in an implementation, network 220 can be an ad-hoc network and can omit one or more of access points 210A/210B. Computing and communications system 200 may include devices, units, or elements not shown in FIG. 2. For example, computing and communications system 200 may include many more communicating devices, networks, and access points.

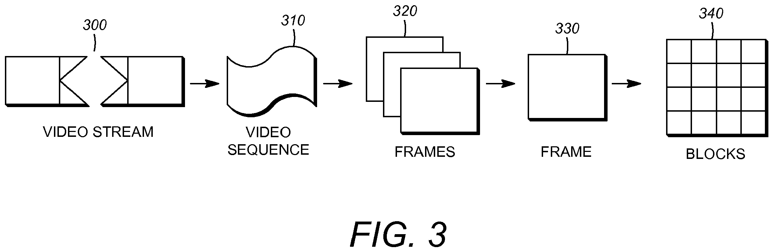

FIG. 3 is a diagram of a video stream 300 for use in encoding and decoding in accordance with implementations of this disclosure. Video stream 300, such as a video stream captured by a video camera or a video stream generated by a computing device, may include a video sequence 310. Video sequence 310 may include a sequence of adjacent frames 320. Although three adjacent frames 320 are shown, video sequence 310 can include any number of adjacent frames 320. Each frame 330 from adjacent frames 320 may represent a single image from the video stream. Each frame 330 may include blocks 340. Although not shown in FIG. 3, block 340 can include pixels. For example, block 340 can include a 16x16 group of pixels, an 8x8 group of pixels, an 8x16 group of pixels, or any other group of pixels. Unless otherwise indicated herein, the term 'block' can include a superblock, a macroblock, a segment, a slice, or any other portion of a frame. A frame, a block, a pixel, or a combination thereof can include display information, such as luminance information, chrominance information, or any other information that can be used to store, modify, communicate, or display the video stream or a portion thereof.

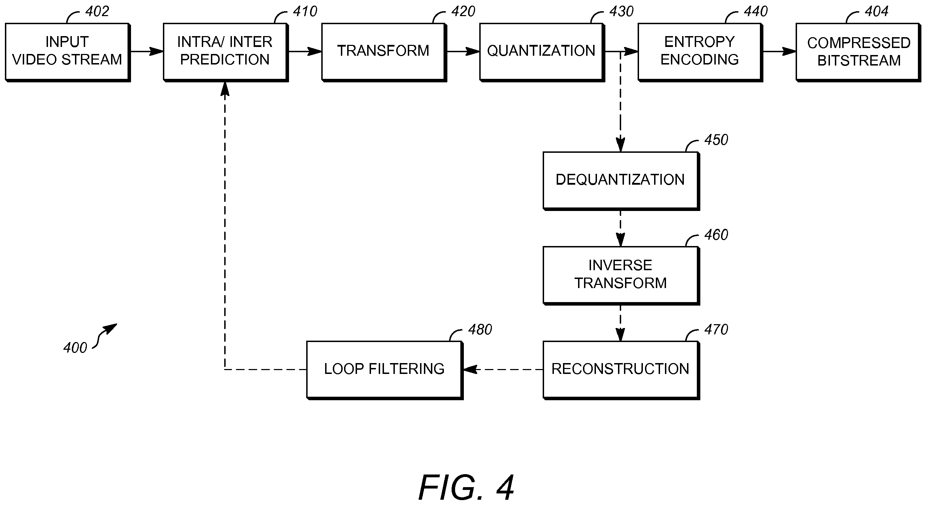

FIG. 4 is a block diagram of an encoder 400 in accordance with implementations of this disclosure. Encoder 400 can be implemented in a device, such as computing device 100 shown in FIG. 1 or computing and communication devices 100A/100B/100C shown in FIG. 2, as, for example, a computer software program stored in a data storage unit, such as memory 150 shown in FIG. 1. The computer software program can include machine instructions that may be executed by a processor, such as processor 160 shown in FIG. 1, and may cause the device to encode video data as described herein. Encoder 400 can be implemented as specialized hardware included, for example, in computing device 100.

Encoder 400 can encode an input video stream 402, such as video stream 300 shown in FIG. 3 to generate an encoded (compressed) bitstream 404. In some implementations, encoder 400 may include a forward path for generating compressed bitstream 404. The forward path may include an intra/inter prediction unit 410, a transform unit 420, a quantization unit 430, an entropy encoding unit 440, or any combination thereof. In some implementations, encoder 400 may include a reconstruction path (indicated by the broken connection lines) to reconstruct a frame for encoding of further blocks. The reconstruction path may include a dequantization unit 450, an inverse transform unit 460, a reconstruction unit 470, a loop filtering unit 480, or any combination thereof. Other structural variations of encoder 400 can be used to encode video stream 402.

For encoding video stream 402, each frame within video stream 402 can be processed in units of blocks. Thus, a current block may be identified from the blocks in a frame, and the current block may be encoded.

At intra/inter prediction unit 410, the current block can be encoded using either intra-frame prediction, which may be within a single frame, or inter-frame prediction, which may be from frame to frame. Intra-prediction may include generating a prediction block from samples in the current frame that have been previously encoded and reconstructed. Inter-prediction may include generating a prediction block from samples in one or more previously constructed reference frames. Generating a prediction block for a current block in a current frame may include performing motion estimation to generate a motion vector indicating an appropriate reference block in the reference frame.

Intra/inter prediction unit 410 may subtract the prediction block from the current block (raw block) to produce a residual block. Transform unit 420 may perform a block-based transform, which may include transforming the residual block into transform coefficients in, for example, the frequency domain. Examples of block-based transforms include the Karhunen-Loève Transform (KLT), the Discrete Cosine Transform (DCT), and the Singular Value Decomposition Transform (SVD). In an example, DCT may include transforming a block into the frequency domain using transform coefficient values based on spatial frequency, with the lowest frequency (i.e., DC) coefficient at the top-left of the matrix and the highest frequency coefficient at the bottom-right of the matrix.

Quantization unit 430 may convert the transform coefficients into discrete quantum values, which may be referred to as quantized transform coefficients or quantization levels. The quantized transform coefficients can be entropy encoded by entropy encoding unit 440 to produce entropy-encoded coefficients. Entropy encoding can include using a probability distribution metric. The entropy-encoded coefficients and information used to decode the block, which may include the type of prediction used, motion vectors, and quantizer values, can be output to compressed bitstream 404. Compressed bitstream 404 can be formatted using various techniques, such as run-length encoding (RLE) and zero-run coding.

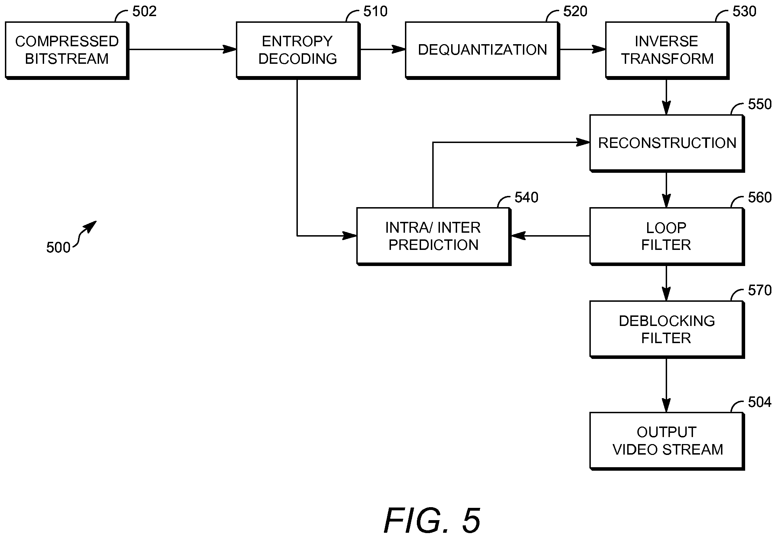

The reconstruction path can be used to maintain reference frame synchronization between encoder 400 and a corresponding decoder, such as decoder 500 shown in FIG. 5. The reconstruction path may be similar to the decoding process discussed below, and may include dequantizing the quantized transform coefficients at dequantization unit 450 and inverse transforming the dequantized transform coefficients at inverse transform unit 460 to produce a derivative residual block. Reconstruction unit 470 may add the prediction block generated by intra/inter prediction unit 410 to the derivative residual block to create a reconstructed block. Loop filtering unit 480 can be applied to the reconstructed block to reduce distortion, such as blocking artifacts.

Other variations of encoder 400 can be used to encode compressed bitstream 404. For example, a non-transform based encoder 400 can quantize the residual block directly without transform unit 420. In some implementations, quantization unit 430 and dequantization unit 450 may be combined into a single unit.

FIG. 5 is a block diagram of a decoder 500 in accordance with implementations of this disclosure. Decoder 500 can be implemented in a device, such as computing device 100 shown in FIG. 1 or computing and communication devices 100A/100B/100C shown in FIG. 2, as, for example, a computer software program stored in a data storage unit, such as memory 150 shown in FIG. 1. The computer software program can include machine instructions that are executed by a processor, such as processor 160 shown in FIG. 1, and may cause the device to decode video data as described herein. Decoder 500 can be implemented as specialized hardware included, for example, in computing device 100.

Decoder 500 receives a compressed bitstream 502, such as compressed bitstream 404 shown in FIG. 4, and decodes compressed bitstream 502 to generate an output video stream 504. Decoder 500 may include an entropy decoding unit 510, a dequantization unit 520, an inverse transform unit 530, an intra/inter prediction unit 540, a reconstruction unit 550, a loop filtering unit 560, a deblocking filtering unit 570, or any combination thereof. Other structural variations of decoder 500 can be used to decode compressed bitstream 502.

Entropy decoding unit 510 may decode data elements within compressed bitstream 502 using, for example, Context Adaptive Binary Arithmetic Decoding, to produce a set of quantized transform coefficients. Dequantization unit 520 can dequantize the quantized transform coefficients, and inverse transform unit 530 can inverse transform the dequantized transform coefficients to produce a derivative residual block, which may correspond with the derivative residual block generated by inverse transformation unit 460 shown in FIG. 4. Using header information decoded from compressed bitstream 502, intra/inter prediction unit 540 may generate a prediction block corresponding to the prediction block created in encoder 400. At reconstruction unit 550, the prediction block can be added to the derivative residual block to create a reconstructed block. Loop filtering unit 560 can be applied to the reconstructed block to reduce blocking artifacts. Deblocking filtering unit 570 can be applied to the reconstructed block to reduce blocking distortion, and the result may be output as output video stream 504.

Other variations of decoder 500 can be used to decode compressed bitstream 502. For example, decoder 500 can produce output video stream 504 without deblocking filtering unit 570.

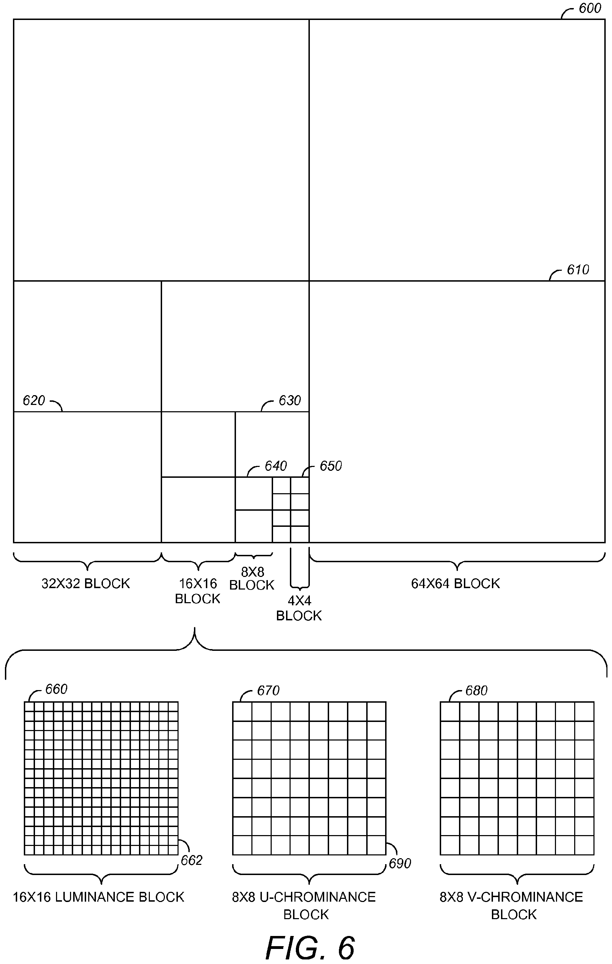

FIG. 6 is a block diagram of a representation of a portion 600 of a frame, such as frame 330 shown in FIG. 3, in accordance with implementations of this disclosure. As shown, portion 600 includes four 64x64 blocks 610, which may be referred to as superblocks, in two rows and two columns in a matrix or Cartesian plane. In some implementations, a superblock may be a basic or maximum coding unit. One or more superblocks may include four 32x32 blocks 620. One or more 32x32 blocks 620 may include four 16x16 blocks 630. One or more 16x16 blocks 630 may include four 8x8 blocks 640. One or more 8x8 blocks 640 may include four 4x4 blocks 650. One or more 4x4 blocks 650 may include 16 pixels, which are represented in four rows and four columns in each respective block in the Cartesian plane or matrix. The pixels may include information representing an image captured in the frame, such as luminance information, color information, and location information. In some implementations, a block, such as 16x16 pixel block 630 as shown, includes a luminance block 660 that includes luminance pixels 662; and two chrominance blocks 670/680, such as a U or Cb chrominance block 670, and a V or Cr chrominance block 680. Chrominance blocks 670/680 include chrominance pixels 690. For example, luminance block 660 includes 16x16 luminance pixels 662, and each chrominance block 670/680 includes 8x8 chrominance pixels 690 as shown. Although one arrangement of blocks is shown, any arrangement may be used. Although FIG. 6 shows NxN blocks, in some implementations, NxM blocks may be used where N≠M. For example, 32x64 blocks, 64x32 blocks, 16x32 blocks, 32x16 blocks, or any other size blocks may be used. In some implementations, Nx2N blocks, 2NxN blocks, or a combination thereof may be used.

In some implementations, video coding may include ordered block-level coding. Ordered block-level coding includes coding blocks of a frame in an order, such as raster-scan order, wherein blocks are identified and processed starting with a block in the upper left corner of the frame, or portion of the frame, and proceeding along rows from left to right and from the top row to the bottom row, identifying each block in turn for processing. For example, the superblock in the top row and left column of a frame may be the first block coded and the superblock immediately to the right of the first block may be the second block coded. The second row from the top may be the second row coded, such that the superblock in the left column of the second row may be coded after the superblock in the rightmost column of the first row.

In some implementations, coding a block may include using quad-tree coding, which may include coding smaller block units with a block in raster-scan order. For example, the 64x64 superblock shown in the bottom left corner of the portion of the frame shown in FIG. 6 may be coded using quad-tree coding wherein the top left 32x32 block is coded, then the top right 32xz32 block is coded, then the bottom left 32x32 block is coded, and then the bottom right 32x32 block is coded. Each 32x32 block may be coded using quad-tree coding wherein the top left 16x16 block is coded, then the top right 16x16 block is coded, then the bottom left 16x16 block is coded, and then the bottom right 16x16 block is coded. Each 16x16 block may be coded using quad-tree coding wherein the top left 8x8 block is coded, then the top right 8x8 block is coded, then the bottom left 8x8 block is coded, and then the bottom right 8x8 block is coded. Each 8x8 block may be coded using quad-tree coding wherein the top left 4x4 block is coded, then the top right 4x4 block is coded, then the bottom left 4x4 block is coded, and then the bottom right 4x4 block is coded. In some implementations, 8x8 blocks may be omitted for a 16x16 block, and the 16x16 block may be coded using quad-tree coding wherein the top left 4x4 block is coded, then the other 4x4 blocks in the 16x16 block are coded in raster-scan order.

In some implementations, video coding may include compressing the information included in an original, or input, frame by, for example, omitting some of the information in the original frame from a corresponding encoded frame. For example, coding includes reducing spectral redundancy, reducing spatial redundancy, reducing temporal redundancy, or a combination thereof.

In some implementations, reducing spectral redundancy includes using a color model based on a luminance component (Y) and two chrominance components (U and V or Cb and Cr), which is referred to as the YUV or YCbCr color model, or color space. Using the YUV color model includes using a relatively large amount of information to represent the luminance component of a portion of a frame, and using a relatively small amount of information to represent each corresponding chrominance component for the portion of the frame. In an example, a portion of a frame is represented by a high resolution luminance component, which may include a 16x16 block of pixels, and by two lower resolution chrominance components, each of which represents the portion of the frame as an 8x8 block of pixels. A pixel may indicate a value, for example, a value in the range from 0 to 255, and may be stored or transmitted using, for example, eight bits. Although this disclosure is described in reference to the YUV color model, any color model may be used.

In some implementations, reducing spatial redundancy may include transforming a block into the frequency domain using, for example, a DCT. For example, a unit of an encoder, such as transform unit 420 shown in FIG. 4, may perform a DCT using transform coefficient values based on spatial frequency.

In some implementations, reducing temporal redundancy includes using similarities between frames to encode a frame using a relatively small amount of data based on one or more reference frames, which may be previously encoded, decoded and reconstructed frames of the video stream. For example, a block or pixel of a current frame may be similar to a spatially corresponding block or pixel of a reference frame. In some implementations, a block or pixel of a current frame may be similar to block or pixel of a reference frame at a different spatial location, and reducing temporal redundancy may include generating motion information indicating the spatial difference, or translation, between the location of the block or pixel in the current frame and corresponding location of the block or pixel in the reference frame.

Reducing temporal redundancy may include identifying a block or pixel in a reference frame, or a portion of the reference frame, that corresponds with a current block or pixel of a current frame. For example, a reference frame, or a portion of a reference frame, which may be stored in memory, is searched for the best block or pixel to use for encoding a current block or pixel of the current frame. The search may identify the block of the reference frame for which the difference in pixel values between the reference block and the current block is minimized, and is referred to as motion searching. In some implementations, the portion of the reference frame searched may be limited. For example, the portion of the reference frame searched, which is referred to as the search area, may include a limited number of rows of the reference frame. In an example, identifying the reference block includes calculating a cost function, such as a sum of absolute differences (SAD), between the pixels of the blocks in the search area and the pixels of the current block.

In some implementations, the spatial difference between the location of the reference block in the reference frame and the current block in the current frame is represented as a motion vector. The difference in pixel values between the reference block and the current block may be referred to as differential data, residual data, or as a residual block. Generating motion vectors may be referred to as motion estimation, and a pixel of a current block is indicated based on location using Cartesian coordinates as $f_{x,y}$. Similarly, a pixel of the search area of the reference frame is indicated based on location using Cartesian coordinates as $r_{x,y}$. A motion vector (MV) for the current block may be determined based on, for example, a SAD between the pixels of the current frame and the corresponding pixels of the reference frame.

Although frequency-domain denoising is described herein with reference to matrix or Cartesian representation of a frame for clarity, a frame may be stored, transmitted, processed, or any combination thereof, in any data structure such that pixel values may be efficiently predicted for a frame or image. For example, a frame may be stored, transmitted, processed, or any combination thereof, in a two-dimensional data structure such as a matrix as shown, or in a one-dimensional data structure, such as a vector array. A representation of the frame, such as a two-dimensional representation as shown, may correspond to a physical location in a rendering of the frame as an image. For example, a location in the top left corner of a block in the top left corner of the frame corresponds with a physical location in the top left corner of a rendering of the frame as an image.

In some implementations, the process of capturing, or recording, video may be subject to noise or other undesired artifacts. For example, factors such as imperfections in camera manufacture, lighting, or the like, contribute to noise in the input, source, or raw images. Noise in the source video may decrease perceived video quality and may reduce video coding efficiency. For example, input noise, which may be random, unpredictable noise, may be propagated to the decoded video and reduce decoded visual quality. Input noise may reduce compression speed, compression performance and/or compression fidelity.

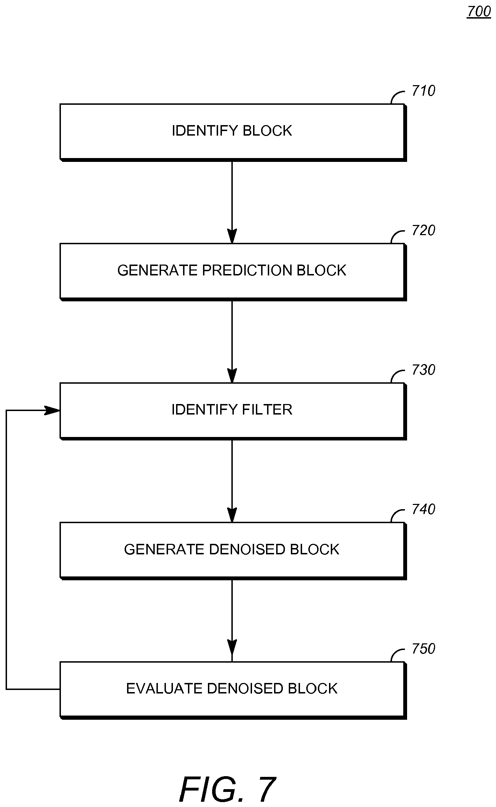

FIG. 7 is a diagram of an example of coding a video stream using temporal-domain denoising in accordance with implementations of this disclosure. In some implementations, an encoder, such as encoder 400 shown in FIG. 4, may receive an input video stream, such as input video stream 402 shown in FIG. 4, may encode the input video stream according to the description of FIG. 4, and may output an encoded video stream, such as compressed bitstream 404 shown in FIG. 4. In some implementations, encoding the video stream may include temporal-domain denoising 700. For example, encoder 400 may include a denoising unit (not shown separately), which may generate a denoised frame, or a portion thereof, based on the source frame, or a portion thereof, and a predicted frame, or a portion thereof, such as the predicted frame generated by prediction unit 410 shown in FIG. 4. In some implementations, the encoder may include a combined prediction and denoising unit. For example, prediction unit 410 of encoder 400 shown in FIG. 4 may include a denoising unit.

Temporal-domain denoising 700 may include identifying a source block at 710, generating a prediction block at 720, identifying a filter at 730, generating a denoised block at 740, evaluating the denoised block at 750, or a combination thereof. In some implementations, temporal-domain denoising 700 includes temporal denoising wherein the value of a denoised pixel may be based on the value of the pixel in the current frame and a corresponding pixel in a reference frame.

In some implementations, a source block is identified at 710. A current frame of the input, or source, video stream may include multiple NxN blocks, such as 16x16 blocks, and a block from the source frame may be identified as the source block. In some implementations, each block from the source frame may be denoised on a block-by-block basis.

In some implementations, a prediction block is generated at 720. For example, a prediction block may be generated based on a reference frame using inter-prediction, such as inter-prediction unit 410 shown in FIG. 4.

In some implementations, a filter is identified at 730. The filter may generate a filtered pixel that has a value between a value of a source pixel from the source block and a value of a corresponding predicted pixel from the prediction block. In some implementations, the filter has a strength that may indicate a relative weight of the source pixel and the predicted pixel. For example, a strong filter generates a filtered pixel that has a value that is closer to the value of the predicted pixel than the value of the source pixel, and a weak filter generates a filtered pixel that has a value that is closer to the value of the source pixel than the value of the predicted pixel. In some implementations, the filter is identified from a set of candidate temporal denoising filters having a variety of strengths. The strongest available filter may be selected in an example.

In some implementations, a denoised block is generated at 740. The denoised block may be generated by applying the selected filter to filter the source block based on the prediction block. In some implementations, each pixel from the source block may be filtered on a pixel-by-pixel basis based on the corresponding pixel from the prediction block. For example, the pixels from the source block are processed in a scan order, such as raster scan order.

In some implementations, the denoised block is evaluated at 750. Evaluating the denoised block may include determining a difference between the denoised block and the source block. In some implementations, the denoised block is rejected or accepted based on whether the difference is within a fidelity threshold. For example, the difference between the denoised block and the source block may be within the fidelity threshold, and the denoised block is accepted.

Identifying a filter at 730, generating a denoised block at 740, and evaluating denoised block at 750 may be repeated iteratively using successively weaker filters, until an acceptable denoised block is identified. In some implementations, the source block may be used as the denoised block. In an example, the set of available filters includes a strong filter and a weak filter. The strong filter is identified at 730, a strongly filtered denoised block is generated at 740, the strongly filtered denoised block is evaluated at 750, the difference between the strongly filtered denoised block and the source block exceeds the fidelity threshold, the strongly filtered denoised block is rejected, the weak filter is identified at 730, a weakly filtered denoised block is generated at 740, the weakly filtered denoised block is evaluated at 750, the difference between the weakly filtered denoised block and the source block exceeds the fidelity threshold, and the weakly filtered denoised block is rejected. As a result, the source block, without denoising, is used as the denoised block.

Although not shown separately in FIG. 7, each block from the current frame may be denoised on a block-by-block basis, such as in raster scan order. Encoding using temporal-domain denoising may include using the denoised block to generate the residual block. For example, a prediction unit, such as prediction unit 410 shown in FIG. 4, generates the residual based on the difference between the source frame and the denoised frame.

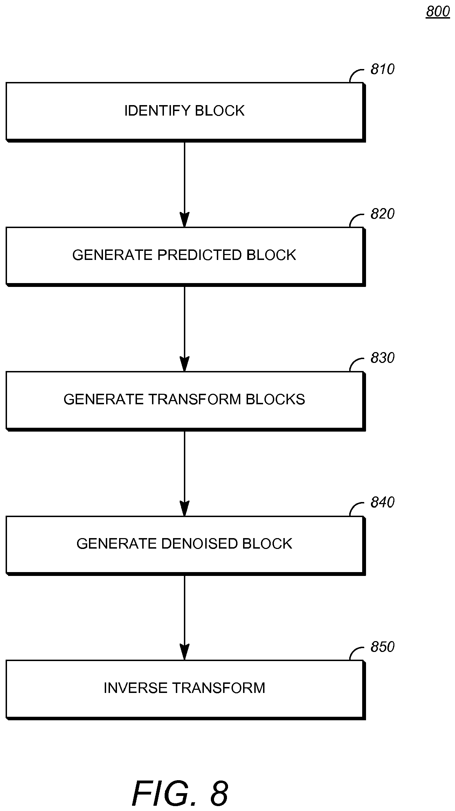

FIG. 8 is a diagram of an example of coding a video stream using frequency-domain denoising in accordance with implementations of this disclosure. In some implementations, an encoder, such as encoder 400 shown in FIG. 4, receives an input video stream, such as input video stream 402 shown in FIG. 4, encodes the input video stream according to FIG. 4, and outputs an encoded video stream, such as compressed bitstream 404. In some implementations, encoding the video stream includes frequency-domain denoising 800. For example, encoder 400 shown in FIG. 4 may include a denoising unit (not shown separately), which that generates a denoised frame, or a portion thereof, based on the source frame, or a portion thereof, and a predicted frame, or a portion thereof, such as the predicted frame generated by prediction unit 410 shown in FIG. 4. In some implementations, the encoder may include a combined prediction and denoising unit, a combined transform and denoising unit, or a combined prediction, transform, and denoising unit.

In some implementations, frequency-domain denoising 800 includes identifying a source block at 810, generating a prediction block at 820, generating transform blocks at 830, generating a denoised block at 840, inverse transforming the denoised block at 850, or a combination thereof. Frequency -domain denoising 800 may include frequency denoising, which may include combined spatial and temporal denoising, wherein the value of a denoised pixel is based on the value of the pixel in the current frame, the value of a corresponding pixel in a reference frame, and the values of spatially-related pixels.

In some implementations, a source block is identified at 810. A current frame of the input, or source, video stream may include multiple NxN or NxM blocks, such as the blocks shown in FIG. 6. For example, the source block may be a 4x4 block, a 64x64 block, or any other size block. A block from the source frame may be identified as the source block. In some implementations, each block from the source frame is denoised on a block-by-block basis. For example, the blocks from the current frame are denoised in an order, such as raster scan order.

In some implementations, a prediction block is generated at 820. A prediction block may be generated based on a reference frame using inter-prediction, such as inter-prediction unit 410 shown in FIG. 4.

In some implementations, transform blocks are generated at 830. A source transform block may be generated from the source block, and a prediction transform block may be generated from the prediction block. For example, a transform unit, such as transform unit 420 shown in FIG. 4, generates a prediction transform block from the predicted block and generates a source transform block from the source block. Generating a transform block may include performing a block-based transform, such as a DCT transform, to generate frequency domain transform coefficients from a block of pixels, such as the source block or the prediction block.

In some implementations, a denoised transform block is generated at 840. Generating a denoised block may include applying a denoising function to the source transform block based on the prediction transform block.

In some implementations, the source transform block may be a function of a corresponding noiseless block, which is referred to as a real block, and additive Gaussian noise. Frequency-domain denoising may recover the real block as the denoised block. In some implementations, the prediction transform block is a function of a real block corresponding to the reference block and additive Laplacian innovation. A frequency-domain denoising function may generate an expectation of the real block based on the source transform block and the prediction transform block.

In an example, $B$ indicates the Y plane of the source block in the pixel domain, $B_{x,y}$ indicates the value the pixel in the row $x$ and column $y$ of $B$, $h$ indicates the height of the source block in pixels, w indicates the width of the source block in pixels, $\beta$ is the discrete transform-domain representation of $B$ ($\beta = dct(B)$), $\beta_0$ indicates the DC coefficient, $\beta_1$, $\beta_2$, ..., $\beta_{hw-1}$ indicate the AC coefficients, $P$ indicates the Y plane of the prediction of $B$ in the pixel domain, and $\pi$ is the discrete transform-domain representation of $P$ ($\pi = dct(P)$).

In some implementations, $\hat{\beta}$ is the transform domain of the source block, $\beta$ represents the noiseless signal, which may be the true or real signal corresponding to the input block, n represents noise added to the true signal during the generation of the source frame, and $\hat{\beta}$ is expressed as the following:

$$\hat{\beta} = \beta + n. \qquad \text{[Equation 1]}$$

The variable $\hat{\pi}$ may be the transform domain of the prediction block, $\pi$ may represent the noiseless signal, which may be the true or real signal corresponding to the predicted block, and e may represent the innovation such that $\hat{\pi}$ is expressed as the following:

$$\hat{\pi} = \pi + e. \qquad \text{[Equation 2]}$$

In some implementations, denoising includes generating an estimate $E$ of $\beta$ based on the source block and the prediction block. Where $x$ represents an integration variable and $dx$ represents a quantity of the integration variable $x$ that approaches zero, estimate E may be expressed as the following:

$$E[\beta|\hat{\beta},\hat{\pi}] = \int_{-\infty}^{+\infty} xf(x|\hat{\beta},\hat{\pi})dx \qquad \text{[Equation 3]}$$

In some implementations, $f$ indicates a conditional probability density function of $\beta$ based on $\hat{\beta}$ and $\hat{\pi}$, which is expressed as the following:

$$f(\beta|\hat{\beta},\hat{\pi}) = \frac{f(\hat{\beta},\hat{\pi}|\beta)f(\beta)}{f(\hat{\beta},\hat{\pi})}$$

[Equation 4]

In some implementations, for a given true block, the noisy block and the predicted block may be independent, which may be expressed as the following:

$$= \frac{f(\hat{\beta}|\beta)f(\hat{\pi}|\beta)f(\beta)}{f(\hat{\beta},\hat{\pi})}$$

$$= \frac{f(\hat{\beta}|\beta)f(\beta|\hat{\pi})f(\hat{\pi})}{f(\hat{\beta},\hat{\pi})}$$

$$= \frac{f(\hat{\beta}|\beta)f(\beta|\hat{\pi})}{\dfrac{f(\hat{\beta},\hat{\pi})}{f(\hat{\pi})}}$$

$$= \frac{f(\hat{\beta}|\beta)f(\beta|\hat{\pi})}{f(\hat{\beta},\hat{\pi})}$$

[Equation 5]

In some implementations, $f(n)$ indicates a function of the noise, and the conditional probability density function may be expressed as the following:

$$f(\beta|\hat{\beta}) = f(\beta + n|\beta)$$
$$= f(n)$$

[Equation 6]

In some implementations, $f(n)$ is modeled with Gaussian distribution, which may be expressed as the following:

$$\mathcal{G}_{0,\sigma}(x - \hat{\beta}).$$

[Equation 7]

In some implementations, $f(e)$ indicates a function of the innovation, and the conditional probability density function may be expressed as the following:

$$f(\beta|\hat{\pi}) = f(\hat{\pi} + e|\hat{\pi}) = f(e)$$

[Equation 8]

In some implementations, $f(e)$ is modeled with Laplace distribution, which may be expressed as the following:

$$\mathcal{L}_{0,b}(x - \hat{\pi}).$$

[Equation 9]

In some implementations, $f_c(\hat{\beta} - \hat{\pi})$ indicates a convolution for the noise and the innovation function

$$\mathcal{G} * \mathcal{L}$$

at the point $\hat{\beta} - \hat{\pi}$, and the estimation may be expressed as the following:

$$E[\beta|\hat{\beta},\hat{\pi}] = \int_{-\infty}^{+\infty} x \frac{\mathcal{G}_{0,\sigma}(x-\hat{\beta}) \cdot \mathcal{L}_{0,b}(x-\hat{\pi})}{\mathcal{G}*\mathcal{L}(\hat{\beta}-\hat{\pi})} dx \qquad \text{[Equation 10]}$$

In some implementations, an approximation of $E[\beta|\hat{\beta},\hat{\pi}]$ is expressed as the following:

$$E[\beta|\hat{\beta},\hat{\pi}] = \int_{-\infty}^{+\infty} x \frac{\mathcal{G}_{0,\sigma}(x-\hat{\beta}) \cdot \mathcal{L}_{0,b}(x-\hat{\pi})}{\mathcal{G}*\mathcal{L}(\hat{\beta}-\hat{\pi})} dx$$

$$= \frac{1}{\mathcal{G}*\mathcal{L}(\hat{\beta}-\hat{\pi})} \int_{-\infty}^{+\infty} x\mathcal{G}_{0,\sigma}(x-\hat{\beta}) \cdot \mathcal{L}_{0,b}(x-\hat{\pi})dx$$

$$\text{[Equation 11]}$$

In some implementations, $i$ may index into a list $x_d$ of $N$ x-values from $l$ to $u$, each spaced by a distance $\Delta$, such that $\Delta = \frac{u-l}{N}$, and the integral may be approximated with a sum, which may be expressed as follows:

$$= \frac{1}{\mathcal{G}*\mathcal{L}(\hat{\beta}-\hat{\pi})} \sum_{i=0}^{N} \Delta \cdot x_i \cdot \mathcal{G}_{0,\sigma}(x_i-\hat{\beta}) \cdot \mathcal{L}_{0,b}(x_i-\hat{\pi})$$

$$\text{[Equation 12]}$$

The convolution may be approximated with a sum, wherein the bounds of the integrals are equal, which may be expressed as follows:

$$= \frac{\sum_{i=0}^{N} x_i \cdot \mathcal{G}_{0,\sigma}(x_i-\hat{\beta}) \cdot \mathcal{L}_{0,b}(x_i-\hat{\pi})}{\sum_{i=0}^{N} \mathcal{G}_{0,\sigma}(x_i-\hat{\beta}) \cdot \mathcal{L}_{0,b}(x_i-\hat{\pi})}$$

$$\text{[Equation 13]}$$

In some implementations, $\min(\hat{\beta}, \hat{\pi}) - |\hat{\beta} - \hat{\pi}|$ is identified as a lower bound and $\max(\hat{\beta}, \hat{\pi}) + |\hat{\beta} - \hat{\pi}|$ is identified as an upper bound. In some implementations, the accuracy of the approximation and the cost of computation increase with the number of points $N$, and $N$ is determined based on metrics, such as the floating-point precision available, time, pixel precision, or a combination thereof. Another approximation of the integral expression may be used.

Although not shown separately in FIG. 8, one or more frequency-domain cutoffs may be applied. For example, the current frame may include an object omitted from previous frames, such as a new object entering the captured scene. In this case, prediction blocks for the portion of the frame including the new object may be predicted inaccurately or may be unpredictable, and a frequency-domain cutoff may be applied.

Applying a frequency-domain cutoff may include determining whether a denoised coefficient value is in the range between the source coefficient value and the predicted coefficient value in the frequency domain. For example, a source coefficient $\beta_i$ may have the value 30, the corresponding prediction coefficient $\pi_i$ may have the value 26, the corresponding denoised coefficient may have the value outside the cutoff range, such as 32, and the value of the source coefficient $\beta_i$ is used as the denoised value. In another example, a source coefficient $\beta_i$ may have the value 30, the corresponding prediction coefficient $\pi_i$ may have the value 26, the corresponding denoised coefficient may have a value within the cutoff range, such as 27, and the denoised coefficient value is used.

Applying a frequency-domain cutoff may include determining whether a difference between the denoised coefficient value and a corresponding source coefficient value is below a denoising frequency-domain similarity threshold. For example, denoising frequency-domain similarity threshold may be a percentage, such as 20%, the difference between the denoised coefficient value and the corresponding source coefficient value may be greater than the denoising frequency-domain similarity threshold, and the source coefficient is used. In another example, the difference between the denoised coefficient value and the corresponding source coefficient value may be less than the denoising frequency-domain similarity threshold, and the denoised coefficient is used. In another example, the difference between the denoised coefficient value and the corresponding source coefficient value may be greater than the denoising frequency-domain similarity threshold, and a value indicated by the denoising frequency-domain similarity threshold, such as the source transform coefficient multiplied by the sum of one (1) and the denoising frequency-domain similarity threshold, is used as the denoised value.

In some implementations, generating the denoised transform block includes generating the denoised coefficients in a first pass and applying the cutoffs in a second pass. Generating the denoised transform block may alternatively include generating the denoised coefficients and applying the cutoffs in a single pass.

In some implementations, generating the denoised transform block includes applying one or more block-based frequency-domain cutoffs. Generating the denoised transform using a block-based frequency-domain cutoff may include identifying a block-based frequency-domain cutoff threshold, which indicates a maximum reliably predictable frequency, and denoising source coefficients that are within the block-based frequency-domain cutoff threshold. For example, the source coefficient value may be above the block-based frequency-domain cutoff threshold, the source coefficient value may be used, and denoising is omitted. In another example, the source coefficient value may be below the block-based frequency-domain cutoff threshold, and a denoised coefficient is generated.

The denoised transform block may be inverse transformed to generate the denoised block at 850. Although not shown separately in FIG. 8, the encoder may generate the residual based on the denoised block and the predicted block. For example, a prediction unit of the encoder, such as intra/inter prediction unit 410 shown in FIG. 4, may subtract the prediction block from the denoised block to produce a residual block. Each block from the current frame may be denoised on a block-by-block basis, such as in raster scan order.

Although not shown separately in FIG. 8, one or more pixel-domain cutoffs may be applied. Applying a pixel-domain cutoff may include determining whether a denoised pixel value is in the range between the source pixel value and the predicted pixel value. For example, the denoised pixel value may be between the source pixel value and the predicted pixel value, and the denoised pixel value is used. In another example, the denoised pixel value may be outside the range between the source pixel value and the predicted pixel value, and the source pixel value is used for generating the residual.

Further, one or more block-based pixel-domain cutoffs may be applied. For example, the total difference between the source block and the denoised block may exceed a block-based pixel-domain cutoff threshold, and the source block is then used for generating the residual.

Although not shown separately in FIG. 8, different heuristics may be used to determine whether the accuracy of the prediction block is above a denoising threshold, and denoising is omitted if the accuracy is below the threshold. For example, a difference between the prediction block and the source block for a frequency or a group of frequencies may be above a threshold, and denoising is omitted.

Although frequency-domain denoising is described with reference to a single reference frame, multiple reference frames may be used such that the denoised block is a function of the source block and multiple prediction blocks.

Other implementations of frequency-domain denoising other than shown in FIG. 8 are available. Additional elements of frequency-domain denoising can be added, and certain elements can be combined.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an embodiment" or "one embodiment" or "an implementation" or "one implementation" throughout is not intended to mean the same embodiment or implementation unless described as such. As used herein, the terms "determine" and "identify", or any variations thereof, includes selecting, ascertaining, computing, looking up, receiving, determining, establishing, obtaining, or otherwise identifying or determining in any manner whatsoever using one or more of the devices shown in FIG. 1.

The implementations of devices 100A, 100B, 100C (and the algorithms, methods, instructions, etc. stored thereon and/or executed thereby) can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors or any other suitable circuit. In the claims, the term "processor" should be understood as encompassing any of the foregoing hardware, either singly or in combination. The terms "signal" and "data" are used interchangeably. Further, portions of devices 100A, 100B, 100C do not necessarily have to be implemented in the same manner.

Further, in one implementation, for example, devices 100A, 100B, 100C can be implemented using a general purpose computer or general purpose /processor with a computer program that, when executed, carries out any of the respective methods, algorithms and/or instructions described herein. In addition or alternatively, for example, a special purpose computer/processor can be utilized which can contain specialized hardware for carrying out any of the methods, algorithms, or instructions described herein.

Any or all of devices 100A, 100B, 100C can, for example, be implemented on computers in a real-time video system. Alternatively, device 100A can be implemented on a server as a transmitting station and devices 100B, 100C can be implemented on a device separate from the server, such as a hand-held communications device, as one or more receiving stations. In this instance, device 100A can encode content using encoder 400 into an encoded video signal and transmit the encoded video signal to device 100B or 100C. In turn, device 100B/100C can then decode the encoded video signal using decoder 500. Alternatively, device 100B/100C can decode content stored locally, for example, content that was not transmitted by device 100A. Other suitable arrangements for a transmitting station and receiving station are available. For example, device 100B or 100C can be a generally stationary personal computer rather than a portable communications device and/or a device including encoder 400 may also include decoder 500.

Further, all or a portion of implementations can take the form of a computer program product accessible from, for example, a tangible computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described implementations have been described in order to allow easy understanding of the application are not limiting. On the contrary, the application covers various modifications and equivalent arrangements included within the scope of the appended claims, which scope is to be accorded the broadest interpretation so as to encompass all such modifications and equivalent structure as is permitted under the law.

## Claims

1. A method comprising:

   identifying a current source block (340, 610-650) from a current source frame (330) from a source video stream (300);
   generating a prediction block for the current source block (340,610-650) using either intra-frame prediction or inter-frame prediction, wherein intra-frame prediction includes generating the prediction block from samples in the current source frame (330) that have been previously encoded and reconstructed and wherein inter-frame prediction includes generating the prediction block from samples in one or more previously constructed reference frames;
   generating a source transform block by transforming the current source block (340,610-650) into the frequency domain;
   generating a prediction transform block by transforming the prediction block into the frequency domain;
   generating, by a processor (140) in response to instructions (160) stored on a non-transitory computer readable medium (150), a denoised transform block based on the source transform block and the prediction transform block;
   generating a denoised block by inverse transforming the denoised transform block;
   generating a residual block based on a difference between the denoised block and the prediction block;
   generating an encoded block by encoding the residual block; and
   outputting or storing the encoded block.

2. The method of claim 1, wherein the current source block (340,610-650) includes noise.

3. The method of claim 1, wherein generating the source transform block by transforming the current source block into the frequency domain includes applying a block-based transform to the current source block, such that the source transform block includes a plurality of source transform coefficients, and wherein generating the prediction transform block by transforming the prediction block into the frequency domain includes applying the block-based transform to the prediction block, such that the prediction transform block includes a plurality of prediction transform coefficients.

4. The method of claim 1, wherein generating the denoised transform block includes applying a denoising function to the source transform block based on the prediction transform block.

5. The method of claim 1, wherein generating the denoised transform block includes applying a frequency-domain cutoff by either:

   i) determining whether a denoised coefficient value of the denoised transform block is in a range between a corresponding source coefficient value of the source transform block and a corresponding prediction coefficient value of the prediction transform block and using the denoised coefficient value if the denoised coefficient value is in the range, or using the source coefficient value if the denoised coefficient value is outside the range; or
   ii) determining whether a difference between the denoised coefficient value and the corresponding source coefficient value is below a denoising frequency-domain similarity threshold and using the denoised coefficient value if the difference is less than the denoising frequency-domain similarity threshold, or using one of the source coefficient value or the source coefficient value multiplied by the sum of one and the denoising frequency-domain similarity threshold if the difference is greater than the denoising frequency-domain similarity threshold.

6. The method of claim 1, wherein generating the denoised transform block includes applying a block-based frequency-domain cutoff by identifying a block-based frequency-domain cutoff threshold indicating a maximum reliably predictable frequency, and denoising source coefficient values of the source transform block which are within the block-based frequency-domain cutoff threshold.

7. The method of claim 1, wherein generating the denoised block includes applying a block-based pixel-domain cutoff by determining that a total difference between source pixel values of the current source block and corresponding denoised pixel values of the denoised block exceeds a block-based pixel-domain cutoff threshold and using the current source block in place of the denoised block in generating the residual block.

8. The method of claim 1, wherein generating the source transform block by transforming the current source block into the frequency domain includes applying a discrete cosine transform to the current source block, such that the source transform block includes a plurality of source transform coefficients, and wherein generating the prediction transform block by transforming the prediction block into the frequency domain includes applying the discrete cosine transform to the prediction block, such that the prediction transform block includes a plurality of prediction transform coefficients.

9. A system (200) comprising one or more computing and communication devices (100), the one or more computing and communication devices comprising a processor (140) and a memory (150) storing instructions (160) which, when executed by the processor (140), cause the processor to perform the method of any of claims 1 to 8.

10. A non-transitory computer-readable medium comprising instructions (160) which, when executed by a processor (140), cause the processor to perform the method of any of claims 1 to 8.

**Patentansprüche**

1. Verfahren, umfassend:

   Identifizieren eines aktuellen Quellenblocks (340, 610-650) von einem aktuellen Quellenframe (330) aus einem Quellenvideodatenstrom (300);
   Erzeugen eines Vorhersageblocks für den aktuellen Quellenblock (340, 610-650) entweder unter Nutzung von Intra-Frame-Vorhersage oder von Inter-Frame-Vorhersage, wobei eine Intra-Frame-Vorhersage ein Erzeugen des Vorhersageblocks anhand von Mustern in dem aktuellen Quellenframe (330), die zuvor codiert und rekonstruiert worden sind, beinhaltet, und wobei eine Inter-Frame-Vorhersage ein Erzeugen des Vorhersageblocks anhand von Mustern in einem oder mehreren zuvor konstruierten Referenzframes beinhaltet;
   Erzeugen eines Quellentransformationsblocks durch Transformieren des aktuellen Quellenblocks (340, 610-650) in die Frequenzdomäne;
   Erzeugen eines Vorhersagetransformationsblocks durch Transformieren des Vorhersageblocks in die Frequenzdomäne;
   Erzeugen, durch einen Prozessor (140) in Reaktion auf Anweisungen (160), die auf einem nichtflüchtigen computerlesbaren Medium (150) gespeichert sind, eines entrauschten Transformationsblocks, der auf dem Quellentransformationsblock und dem Vorhersagetransformationsblock basiert;
   Erzeugen eines entrauschten Blocks durch inverses Transformieren des entrauschten Transformationsblocks;

Erzeugen eines Restblocks basierend auf einer Differenz zwischen dem entrauschten Block und dem Vorhersageblock;

Erzeugen eines codierten Blocks durch Codieren des Restblocks; und Ausgeben oder Speichern des codierten Blocks.

2. Verfahren nach Anspruch 1, wobei der aktuelle Quellenblock (340, 610-650) Rauschen beinhaltet.

3. Verfahren nach Anspruch 1, wobei das Erzeugen des Quellentransformationsblocks durch Transformieren des aktuellen Quellenblocks in die Frequenzdomäne ein Anwenden einer blockbasierten Transformation auf den aktuellen Quellenblock beinhaltet, sodass der Quellentransformationsblock eine Vielzahl von Quellentransformationskoeffizienten beinhaltet, und wobei das Erzeugen des Vorhersagetransformationsblocks durch Transformieren des Vorhersageblocks in die Frequenzdomäne ein Anwenden der blockbasierten Transformation auf den Vorhersageblock beinhaltet, sodass der Vorhersagetransformationsblock eine Vielzahl von Vorhersagetransformationskoeffizienten beinhaltet.

4. Verfahren nach Anspruch 1, wobei das Erzeugen des entrauschten Transformationsblocks ein Anwenden einer Entrauschungstransformation auf den Quellentransformationsblock basierend auf dem Vorhersagetransformationsblock beinhaltet.

5. Verfahren nach Anspruch 1, wobei das Erzeugen des entrauschten Transformationsblocks ein Anwenden einer Frequenzbereichsgrenze durch eines der folgenden beinhaltet:

i) Ermitteln, ob ein entrauschter Koeffizientenwert des entrauschten Transformationsblocks in einem Bereich zwischen einem entsprechenden Quellenkoeffizientenwert des Quellentransformationsblocks und einem entsprechenden Vorhersagekoeffizientenwert des Vorhersagetransformationsblocks liegt, und Verwenden des entrauschten Koeffizientenwerts, wenn der entrauschte Koeffizientenwert in dem Bereich liegt, oder Verwenden des Quellenkoeffizientenwerts, wenn der entrauschte Koeffizientenwert außerhalb des Bereichs liegt; oder

ii) Ermitteln, ob eine Differenz zwischen dem entrauschten Koeffizientenwert und dem entsprechenden Quellenkoeffizientenwert unterhalb eines Entrauschungsfrequenzdomänen-Ähnlichkeitsschwellenwertes liegt, und Verwenden des entrauschten Koeffizientenwertes, wenn die Differenz kleiner als der Entrauschungsfrequenzdomänen-Ähnlichkeitsschwellenwert ist, oder Verwenden von einem von dem Quellenkoeffizientenwert oder dem Quellenkoeffizientenwert, multipliziert mit der Summe aus Eins und dem Entrauschungsfrequenzdomänen-Ähnlichkeitsschwellenwert, wenn die Differenz größer als der Entrauschungsfrequenzdomänen-Ähnlichkeitsschwellenwert ist.

6. Verfahren nach Anspruch 1, wobei das Erzeugen des entrauschten Transformationsblocks ein Anwenden einer blockbasierten Frequenzdomänengrenze durch Identifizieren eines Schwellenwerts für die blockbasierte Frequenzdomänengrenze, der eine maximale, zuverlässig vorhersagbare Frequenz angibt, und Entrauschungsquellenkoeffizientenwerte des Quellentransformationsblocks, die innerhalb des Schwellenwertes für die blockbasierte Frequenzdomänengrenze liegen, beinhaltet.

7. Verfahren nach Anspruch 1, wobei das Erzeugen des entrauschten Blocks ein Anwenden einer blockbasierten Pixeldomänengrenze durch Ermitteln, dass eine Gesamtdifferenz zwischen Quellpixelwerten des aktuellen Quellenblocks und entsprechenden entrauschten Pixelwerten des entrauschten Blocks einen Schwellenwert für die blockbasierte Pixeldomänengrenze überschreitet, und ein Verwenden des aktuellen Quellenblocks anstelle des entrauschten Blocks bei der Erzeugung des Restblocks beinhaltet.

8. Verfahren nach Anspruch 1, wobei das Erzeugen des Quellentransformationsblocks durch Transformieren des aktuellen Quellenblocks in die Frequenzdomäne ein Anwenden einer diskreten Cosinustransformation auf den aktuellen Quellenblock beinhaltet, sodass der Quellentransformationsblock eine Vielzahl von Quellentransformationskoeffizienten beinhaltet, und wobei das Erzeugen des Vorhersagetransformationsblocks durch Transformieren des Vorhersageblocks in die Frequenzdomäne ein Anwenden der diskreten Cosinustransformation auf den Vorhersageblock beinhaltet, sodass der Vorhersagetransformationsblock eine Vielzahl von Vorhersagetransformationskoeffizienten beinhaltet.

9. System (200), umfassend eine oder mehrere Computer- und Kommunikationsgeräte (100), wobei das eine oder die mehreren Computer- und Kommunikationsgeräte einen Prozessor (140) und einen Speicher (150) umfassen, der Anweisungen (160) speichert, die, bei Ausführung durch den Prozessor (140), den Prozessor veranlassen, das Verfahren nach einem der Ansprüche 1 bis 8 durchzuführen.

10. Nichtflüchtiges computerlesbares Medium, das computerausführbare Anweisungen (160) umfasst, die, bei Ausführung durch einen Prozessor (140), den Prozessor veranlassen, das Verfahren nach einem der Ansprüche 1 bis 8 durchzuführen.

## Revendications

1. Procédé comprenant :

l'identification d'un bloc source actuel (340, 610-650) à partir d'une trame source actuelle (330) à partir d'un flux vidéo source (300) ;
la génération d'un bloc de prédiction pour le bloc source actuel (340, 610-650) à l'aide d'une prédiction intra-trame ou d'une prédiction inter-trame, dans lequel la prédiction intra-trame comprend la génération du bloc de prédiction à partir des échantillons dans la trame source actuelle (330) qui ont été préalablement encodés et reconstruits et dans lequel la prédiction inter-trame comprend la génération du bloc de prédiction à partir d'échantillons dans une ou plusieurs trames de référence précédemment construites ;
la génération d'un bloc de transformation de source par la transformation du bloc source actuel (340, 610-650) dans le domaine de fréquence ;
la génération d'un bloc de transformation de prédiction par la transformation du bloc de prédiction dans le domaine de fréquence ;
la génération, par un processeur (140) en réponse aux instructions (160) stockées sur un support lisible par ordinateur non transitoire (150), d'un bloc de transformation dénoisé sur base du bloc de transformation de source et du bloc de transformation de prédiction ;
la génération d'un bloc dénoisé par la transformation inverse du bloc de transformation dénoisé ;
la génération d'un bloc résiduel sur base d'une différence entre le bloc dénoisé et le bloc de prédiction ;
la génération d'un bloc encodé par l'encodage du bloc résiduel ; et la sortie ou le stockage du bloc encodé.

2. Procédé selon la revendication 1, dans lequel le bloc source actuel (340, 610-650) comprend du bruit.

3. Procédé selon la revendication 1, dans lequel la génération du bloc de transformation de source par la transformation du bloc source actuel dans le domaine de fréquence comprend l'application d'une transformation sur base d'un bloc au bloc source actuel, de sorte que le bloc de transformation de source comprend une pluralité de coefficients de transformation de source, et dans lequel la génération du bloc de transformation de prédiction par la transformation du bloc de prédiction dans un domaine de fréquence comprend l'application de la transformation sur base d'un bloc au bloc de prédiction, de sorte que le bloc de transformation de prédiction comprend une pluralité de coefficients de transformation.

4. Procédé selon la revendication 1, dans lequel la génération du bloc de transformation dénoisé comprend l'application d'une fonction de dénoisage au bloc de transformation de source sur base du bloc de transformation de prédiction.

5. Procédé selon la revendication 1, dans lequel la génération du bloc de transformation dénoisé comprend l'application d'un seuil de domaine de fréquence par :

i) la détermination de si une valeur de coefficient dénoisé du bloc de transformation dénoisé est dans une plage entre une valeur de coefficient source correspondant du bloc de transformation de source et une valeur de coefficient de prédiction correspondant du bloc de transformation de prédiction et à l'aide de la valeur du coefficient dénoisé si la valeur du coefficient dénoisé est dans la plage, ou à l'aide de la valeur de coefficient source si la valeur du coefficient dénoisé est en dehors de la plage ; ou
ii) la détermination si une différence entre la valeur du coefficient dénoisé et la valeur du coefficient source correspondante est inférieure au seuil de similarité de domaine de fréquence de dénoisage et à l'aide de la valeur du coefficient dénoisé si la différence est inférieure au seuil de similarité de domaine de fréquence de dénoisage, ou à l'aide d'une de la valeur de coefficient source ou de la valeur du coefficient source multipliée par la somme d'un et le seuil de similarité de domaine de fréquence de dénoisage si la différence est supérieure au seuil de similarité de domaine de fréquence de dénoisage.

6. Procédé selon la revendication 1, dans lequel la génération du bloc de transformation dénoisé comprend l'application d'une coupure de domaine de fréquence sur basée d'un bloc par l'identification d'un seuil de domaine de fréquence sur base d'un bloc indiquant une fréquence de précision maximale fiable, et le dénoisage des valeurs de coefficient source du bloc de transformation de source qui se trouvent dans le seuil de domaine de fréquence sur base d'un bloc.

7. Procédé selon la revendication 1, dans lequel la génération du bloc dénoisé comprend l'application d'un seuil de domaine pixel sur base d'un bloc par la détermination qu'une différence totale entre les valeurs de pixel source du bloc source actuel et les valeurs de pixel dénoisées correspondantes du bloc dénoisé dépasse un seuil de domaine de pixel sur base d'un bloc et à l'aide du bloc source actuel à la place du bloc dénoisé dans la génération du bloc résiduel.

8. Procédé selon la revendication 1, dans lequel la génération du bloc de transformation de source par la transformation du bloc source actuel dans le domaine de fréquence comprend l'application d'une transformation de cosinus discret au bloc source actuel, de sorte que le bloc de transformation de source comprend une pluralité de coefficients de transformation de source, et dans lequel la génération du bloc de transformation par la transformation du bloc de prédiction dans le domaine de fréquence comprend l'application d'une transformation de cosinus discret au bloc de prédiction de sorte que bloc de transformation de prédiction, comprend une pluralité de coefficients de transformation de prédiction.

9. Système (200) comprenant un ou plusieurs dispositifs informatiques et de communication (100), le ou les dispositifs informatiques et de communication comprenant un processeur (140) et une mémoire (150) stockant des instructions (160) qui, lorsqu'elles sont exécutées par le processeur (140), amènent le processeur à exécuter le procédé selon l'une quelconque des revendications 1 à 8.

10. Support lisible par ordinateur non transitoire comprenant des instructions (160) qui, lorsqu'elles sont exécutées par un processeur (140), amènent le processeur à exécuter le procédé selon l'une quelconque des revendications 1 à 8.

FIG. 1

FIG. 2

VIDEO STREAM    VIDEO SEQUENCE    FRAMES    FRAME    BLOCKS

*FIG. 3*

*FIG. 4*

502 — COMPRESSED BITSTREAM

510 — ENTROPY DECODING

520 — DEQUANTIZATION

530 — INVERSE TRANSFORM

540 — INTRA/ INTER PREDICTION

550 — RECONSTRUCTION

560 — LOOP FILTER

570 — DEBLOCKING FILTER

504 — OUTPUT VIDEO STREAM

500

*FIG. 5*

FIG. 6

*700*

710

IDENTIFY BLOCK

720

GENERATE PREDICTION BLOCK

730

IDENTIFY FILTER

740

GENERATE DENOISED BLOCK

750

EVALUATE DENOISED BLOCK

*FIG. 7*

*800*

```
                                              ┌─ 810
        ┌─────────────────────────────────┐
        │         IDENTIFY BLOCK          │
        └─────────────────────────────────┘
                        │
                        ▼
                                              ┌─ 820
        ┌─────────────────────────────────┐
        │     GENERATE PREDICTED BLOCK    │
        └─────────────────────────────────┘
                        │
                        ▼
                                              ┌─ 830
        ┌─────────────────────────────────┐
        │    GENERATE TRANSFORM BLOCKS    │
        └─────────────────────────────────┘
                        │
                        ▼
                                              ┌─ 840
        ┌─────────────────────────────────┐
        │     GENERATE DENOISED BLOCK     │
        └─────────────────────────────────┘
                        │
                        ▼
                                              ┌─ 850
        ┌─────────────────────────────────┐
        │        INVERSE TRANSFORM        │
        └─────────────────────────────────┘
```

*FIG. 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1499114 A2